# EUROPÄISCHE PATENTSCHRIFT

(11) **EP 1 328 476 B1**
(45) Veröffentlichungstag und Bekanntmachung des Hinweises auf die Patenterteilung: **30.03.2011**
(21) Anmeldenummer: 01980422.8
(22) Anmeldetag: 21.09.2001
(51) Int. Cl.: C02F 1/28, C01G 49/02, B01J 20/06, B01D 53/26

(54) **KONTAKT- UND ADSORBER-GRANULATE**
CONTACT AND ADSORBER GRANULATES
GRANULES DE CONTACT ET GRANULES ADSORBANTS

(30) Priorität: 26.09.2000 DE 10047997; 29.03.2001 DE 10115415; 18.06.2001 DE 10129304
(43) Veröffentlichungstag der Anmeldung: 23.07.2003
(73) Patentinhaber: LANXESS Deutschland GmbH, 51369 Leverkusen (DE)
(72) Erfinder: SCHLEGEL, Andreas, 47800 Krefeld (DE)
(86) Internationale Anmeldenummer: PCT/EP2001/010926
(87) Internationale Veröffentlichungsnummer: WO 2002/026632

(56) Entgegenhaltungen:
- WO-A-83/03595
- WO-A-99/50182
- DE-A1- 4 235 944
- DE-A1- 4 235 946
- JP-A- 58 049 694
- US-A- 4 459 370
- US-A- 4 481 087
- US-A- 4 515 756
- PATENT ABSTRACTS OF JAPAN vol. 1996, no. 07, 31. Juli 1996 (1996-07-31) & JP 08 059244 A (TODA KOGYO CORP), 5. März 1996 (1996-03-05)

## Beschreibung

Die vorliegende Erfindung betrifft Agglomerate von feinteiligem Eisenoxihydroxid der Phase α-FeOOH in stückiger Form mit einer Korngröße von 0,2 bis 40 mm, wobei das feinteilige Eisenoxihydroxid eine BET-Oberfläche von 50 bis 500 m²/g aufweist, Apparate enthaltend vorgenannte Agglomerate, ein Verfahren zur Herstellung der Agglomerat sowie die Verwendung der Agglomerate und Apparate zur Reinigung von Gasen und Flüssigkeiten, wie insbesondere zur Entfernung von Schwermetallen, sowie Phosphor-, Antimon-, Beryllium-, or, Selen-, Tellur- sowie Cyanoverbindungen und Arsenverbindungen aus wasser.

Kontakt- und Adsorber-Granulate, auch solche auf Basis von Eisenoxiden und/oder Eisenoxihydroxiden, sind bereits beschrieben worden. Sie werden überwiegend in kontinuierlichen Verfahren eingesetzt, wobei sie sich üblicherweise in tunn- bzw. kolonnenartigen Apparaten befinden, die von dem zu behandelnden Medium durchströmt werden, und an der äußeren und inneren Oberfläche der Granulate finden die chemischen bzw. physikalischen Reaktions- bzw. Adsorptionsprozesse statt. Zu diesem Zweck können pulverförmige Materialien nicht eingesetzt werden weil sie sich in Fließrichtung des Mediums verdichten und dadurch den Strömungswiderstand bis zur Blockierung des Apparates erhöhen. Wird ein Apparat durch Rückspülung gereinigt (s. unten), werden große Mengen des Pulvers ausgetragen, gehen verloren bzw. führen zu einer nicht tolerierbaren Belastung des Abwassers.

Die strömenden Medien üben jedoch auch Kräfte auf die Granulate aus, die zur Abrasion und/oder zu einer Bewegung bis hin zu heftiger Agitation der Granulate führen können. Dadurch stoßen die Granulate aneinander, und infolgedessen entsteht unerwünschter Abrieb. Dieser führt zu Verlust von Kontakt- bzw. Adsorbermaterial und Verunreinigung des zu behandelnden Mediums.

Eisenoxid und -hydroxidhaltige Adsorptionsmittel/Reaktionsmittel sind z.B. im Bereich der Wasserreinigung oder Gasreinigung vorteilhaft einsetzbar. Bei der Wasserreinigung wird dieses Mittel in horizontal oder vertikal durchströmten Filtern bzw.

Adsorberkolonnen oder durch Zugabe zu dem zu behandelnden Wasser für die Abscheidung von gelösten, suspendierten oder emulgierten organischen oder anorganischen Phosphor-, Arsen-, Antimon-, Schwefel-, Selen-, Tellur-, Beryllium- sowie Cyano- und Schwermetallverbindungen aus beispielsweise Trinkwasser, Brauchwasser, industriellem, kommunalem Abwasser, Mineral-, Weih- und Heilwasser sowie Gartenteich- und Agrarwasser eingesetzt. Möglich ist auch der Einsatz in sogenannten reaktiven Wänden zur Abscheidung der genannten Schadstoffe aus Grund- und Sickerwasserleitem von kontaminierten Standorten (Deponien).

Bei der Gasreinigung wird das Mittel in Adsorbern für die Bindung unerwünschter Bestandteile wie Schwefelwasserstoff, Mercaptanen und Blausäure, sowie sonstiger Phosphor-, Arsen-, Antimon-, Schwefel-, Selen-, Tellur-, sowie Cyano- und Schwermetallverbindungen in Abgasen eingesetzt. Es ist auch möglich, Gase wie HF, HCl, H₂S, SOₓ, NOₓ zu adsorbieren.

Möglich ist auch die Entfernung von Phosphor-, Arsen-, Antimon-, Selen-, Tellur-, sowie Cyano- und Schwermetallverbindungen aus Altölen und sonstigen kontaminierten organischen Lösungsmitteln.

Kontakt- und Adsorber-Granulate auf Basis von Eisenoxiden und/oder Eisenoxihydroxiden werden auch zur Katalyse chemischer Reaktionen in der Gasphase oder in der flüssigen Phase eingesetzt.

Es sind auch verschiedenartige Verfahren bekannt, um mit Hilfe von Adsorptionsmitteln die Spuren- und Schadstoffe aus wässrigen Systemen zu entfernen.

So wird der DE-A 3 120 891 ein Verfahren beschrieben, bei welchem für die Abtrennung vornehmlich von Phosphaten aus Oberflächenwasser eine Filtration über Aktivtonerde mit einer Körnung von 1 bis 3 mm erfolgt.

Zum Entfernen von Schadstoffen aus Wasser beschreibt die DE-A 3 800 873 ein Adsorptionsmittel auf der Basis von porösen Materialien wie zum Beispiel hydrophobierter Kreide mit feiner bis mittlerer Körnung.

In der DE-A 3 703 169 wird ein Verfahren zur Herstellung eines granulierten Filterstoffes zum Aufbereiten von Naturwasser offenbart. Das Adsorbens wird durch Granulierung einer wässrigen Suspension von Kaolin unter Zugabe von pulverförmigem Dolomit in einer Wirbelschicht hergestellt. Anschließend werden die Granalien bei 900 bis 950° C gebrannt.

Aus der DE-A 40 34 417 ist ein Verfahren zu Herstellung und Verwendung von hochreaktiven Reagenzien für die Abgas- und Abwasserreinigung bekannt. Beschrieben werden hier Gemische aus Ca(OH)₂ mit Zusätzen von Tonen, Steinmehlen, Flugstaub und Flugaschen, die porös hergestellt werden und eine Oberfläche von ca. 200 m²/g besitzen.

Die genannten Verfahren bzw. die hierzu eingesetzten Kontakte haben den gemeinsame Nachteil, dass die jeweilige für die selektive Adsorption von Inhaltsstoffen der zu reinigenden Medien verantwortliche Komponente, also das eigentliche Adsorbens, mit hohen Mengen an Zuschlagstoffen versetzt werden muss, um eine Formgebung zu Granulaten zuzulassen. Hierdurch erniedrigt sich in deutlichem Maße die Bindekapazität für die zu entfernenden Wasserschadstoffe. Außerdem ist die spätere Aufarbeitung bzw. Weiterverwertung des Materials problematisch, da die als Bindemittel eingesetzten Fremdstoffe erst wieder abgetrennt werden müssen.

In der DE-A 4 214 487 werden ein Verfahren und ein Reaktor zum Entfernen von Verunreinigungen aus Wasser beschrieben. Ein trichterförmiger Reaktor, in dem als Sorbens für Wasserverunreinigungen fein verteiltes Eisenhydroxid in flockiger Form eingesetzt wird, wird horizontal durchströmt. Nachteilig bei diesem Verfahren ist der Einsatz des flockenförmigen Eisenhydroxids, der aufgrund der geringen Dichteunterschiede zwischen Wasser und Eisenhydroxid dazu führt, dass ein derartiger Reaktor nur mit sehr geringen Strömungsgeschwindigkeiten betrieben werden kann und die Gefahr besteht, dass das Sorbens, gegebenenfalls bereits mit Schadstoffen beladen, gemeinsam mit dem Wasser aus dem Reaktor ausgetragen wird.

In JP-A 55 132 633 wird granulierter Rotschlamm als Nebenprodukt der Aluminiumproduktion als Adsorbens für Arsen beschrieben. Dieses setzt sich aus Fe₂O₃, Al₂O₃ und SiO₂ zusammen. Über die Stabilität der Granulate und über das Granulationsverfahren wird hierin nicht berichtet. Ein weiterer Nachteil bei diesem Adsorbens ist die mangelnde Konstanz in der Zusammensetzung des Produktes, die unsichere Verfügbarkeit und die mögliche Aluminium-Belastung des Trinkwassers. Da Aluminium im Verdacht steht, die Ausbildung der Alzheimer'schen Krankheit zu begünstigen, ist insbesondere die Kontamination mit diesem zu vermeiden.

In DE-A 19 826 186 wird ein Verfahren zur Herstellung eines Eisenhydroxid enthaltenden Adsorptionsmittels beschrieben. Eine wässrige Polymer-Dispersion wird in Eisenhydroxid in in Wasser dispergierbarer Form eingemischt. Diese Mischung wird dann entweder unter Erlangung eines festen Zustandes getrocknet und das feste Material anschließend mechanisch in die gewünschte Form und/oder Größe zerkleinert oder die Mischung wird gegebenenfalls nach einer Vortrocknung einer Formgebung unterzogen und anschließend unter Erlangung eines festen Zustandes endgetrocknet. Dadurch erhält man ein Material, bei welchem das Eisenhydroxid fest in das Polymer eingebettet ist und das eine hohe Bindekapazität für die üblicherweise in Abwässern oder Abgasen enthaltenen Schadstoffe aufweisen soll.

Nachteilig bei diesem Verfahren ist der Einsatz von organischen Bindemitteln, die das aufzubereitende Wasser durch Auswaschung und/oder Abrieb von Organika zusätzlich belasten. Zudem ist eine Beständigkeit bei längerem Einsatz des Adsorberverbunds nicht gewährleistet. Bakterien und anderen Mikroorganismen kann ein organisches Bindemittel zudem als Nährmedium dienen so dass die Gefahr der Besiedlung des Kontaktes mit Mikroorganismen und der Kontamination des Mediums durch dieselben besteht.

Grundsätzlich ist die Anwesenheit von zur Herstellung der Adsorbentien erforderlichen artfremden Hilfsstoffen bei der Aufarbeitung, dem Rezyclieren bzw. der weiteren Verwertung verbrauchter Adsorbentien nachteilig, weil die Verwertung reiner Stoffe weniger problematisch ist als dies bei Stoffgemischen der Fall ist. So sind beispielsweise polymere Bindemittel bei der weiteren Verwertung von Adsorbermaterialien auf Eisenoxidbasis als Pigmente zur Anfärbung von Beton von Nachteil, da diese Bindemittel die Dispergierung des Pigments im Flüssigbeton behindern.

In der DE-A 4 320 003 wird ein Verfahren zum Entfernen von gelöstem Arsen aus Grundwasser mittels kolloidem oder granuliertem Eisenhydroxid beschrieben. Für die Verwendung von feinen, suspendierten Eisen(III)hydroxid-Produkten wird hier empfohlen, die Eisenhydroxid-Suspension in Fettbettfilter, die mit gekörntem Material oder anderen Trägem mit hoher äußerer oder innerer Porosität gefüllt sind, einzubringen. Auch dieses Verfahren bringt den Nachteil mit sich, dass, bezogen auf das Adsorbens "Substrat + Eisenhydroxid", nur geringe spezifische Beladungskapazitäten erreichbar sind. Außerdem besteht nur eine schwache Bindung zwischen Substrat und Eisenhydroxid, so dass bei einer anschließenden Behandlung mit arsenhaltigem Wasser die Gefahr des Austrags von Eisenhydroxid bzw. Eisenarsenat besteht. In dieser Druckschrift wird weiterhin der Einsatz von granuliertem Eisenhydroxid als Adsorbermaterial für einen Festbettreaktor genannt. Die Herstellung des granulierten Eisenhydroxids erfolgt über eine Gefrier-Konditionierung (Gefriertrocknung) von durch Neutralisation von sauren Eisen(III)salz-Lösungen erhaltenem Eisenhydroxid bei Temperaturen unter minus 5° C. Dieser Herstellungsprozess ist in hohem Maße energieaufwendig und führt zu stark salzbelasteten Abwässern. Außerdem werden als Ergebnis dieses Herstellungsprozesses lediglich sehr kleine Körnchen mit geringer mechanischer Stabilität erhalten. Dies führt bei einem Einsatz in einem Festbettreaktor dazu, dass sich das Kornspektrum durch mechanische Abrasion der Teilchen im Verlaufe des Betriebs deutlich verringert, was wiederum zu Folge hat, dass feindisperse Partikel von beladenem oder unbeladenem Adsorptionsmittel aus dem Reaktor ausgetragen werden. Ein weiterer Nachteil dieser Granulate ist, dass die Adsorptionsfähigkeit gegenüber Arsenverbindungen erheblich vermindert wird, wenn die Granulate, z.B. durch längere Trockenstandzeit, Wasser verlieren.

Aus US-A-5,948,726 sind Adsober/Binder-Systeme bekannt geworden, die erhalten werden, indem einer Mischung aus (a) einem vernetzungsfähigen Binder aus colloidalen Metall- oder Metalloidoxiden, (b) oxidischen Adsorbentien wie Metalloxiden und (c) einer Säure eine ausreichend große Menge an Wasser entzogen wird, so dass die Komponenten (a) und (b) unter Bildung eines Adsorbens/Binder-Systems vernetzen. Ausweislich der Ausführungsbeispiele wird als Binder colloidale Tonerde bzw. Aluminiumoxid eingesetzt.

Nachteilig an diesen Zusammensetzungen ist der bei ihrer Herstellung notwendige Einsatz von Säure (Sp. 9, Z. 4) sowie der Umstand, dass es sich nicht um reine, sondern heterogene Stoffe handelt, was sowohl für die Herstellung, Regenerierung, Entsorgung bzw. Endlagerung derartiger Adsorber, z.B. auf einer Deponie, unerwünscht ist. In den Offenbarungsumfang dieser Schrift sollen auch Adsorber fallen, die zur Adsorption von Arsen geeignet sind; konkrete Beispiele werden jedoch nicht vorgestellt. Bekanntlich ist Aluminiumoxid hinsichtlich der Adsorptionskraft für Arsen den Eisenoxiden deutlich unterlegen.

Zur Wasseraufbereitung werden bevorzugt kontinuierlich betriebene Adsorber eingesetzt, die häufig in Gruppen parallel angeordnet betrieben werden. Um beispielsweise Trinkwasser von organischen Verunreinigungen zu befreien, werden derartige Adsorber mit Aktivkohle beschickt. Zu Spitzenverbrauchszeiten werden dann die vorhandenen Adsorber parallel betrieben, um die Strömungsgeschwindigkeit nicht über das auslegungsbedingte Maximum hinaus ansteigen zu lassen. Während Zeiten niedrigeren Wasserverbrauchs werden einzelne Adsorber aus dem Betrieb genommen und können währenddessen beispielsweise gewartet werden, wobei das Adsorbermaterial besonderen Belastungen ausgesetzt ist, wie weiter unten näher ausgeführt wird.

Auch der Einsatz von Granulaten, die man durch Kompaktieren von z.B. pulverförmigem Eisenoxid durch Anwendung hoher Linienkräfte erzeugen kann, wurde bereits erwogen. Derartige Granulate sind bereits beschrieben worden, um Flüssigbeton homogen anzufärben. Die Anwendung hoher Linienkräfte beim Kompaktieren ist in hohem Maße energie- und kostenaufwendig und die Stabilität der Kompaktate ist bei längerem Einsatz in Adsorbern ungenügend. Daher kommen derartige für den Einsatz in z.B. Adsorbern, insbesondere kontinuierlich betriebenen, bei der Reinigung von Wasser nur bedingt in Betracht. Insbesondere bei der Wartung bzw. Reinigung der Adsorberanlagen durch Rückspülung (s. unten) verlieren derartige Granulate durch die damit verbundene Agitation derselben große Mengen Substanz. Das Rückspül-Abwasser ist durch den Abrieb stark eingetrübt. Dies ist aus mehreren Gründen nicht akzeptabel: Zunächst einmal geht Adsorbermaterial verloren, welches nach einer längen Standzeit hoch mit Verunreinigungen beladen und daher toxikologisch bedenklich ist. Dann wird der Abwasserstrom mit dem Abrieb belastet, der sedimentieren kann und so zur Beeinträchtigung der Rohrleitungssysteme führt und letztlich die Kläranlage physikalisch und toxikologisch unerwünscht belastet, um nur einige Gründe zu nennen.

WO 83/03595, US 4,515,756 und US 4,481,087 beschreiben amorphe Formen von Eisenoxihydroxiden zur Adsorption von Wolfram und Molyböden bzw. Chromat aus wassrigen Lösungen sowie ein Verfahren zur Herstellung derselben, wobei Eisensalze, insbesondere Eisen (III)-Salze, erfindungsgemäss schwachen Basen wie Ammoniak gefällt werden.

Der vorliegenden Erfindung lag daher die Aufgabe zugrunde, einen Kontakt bzw. ein Adsorptionsmittel/Reaktionsmittel auf Basis von Eisenoxihydroxiden der phase α-FeOOH stückiger Form bereitzustellen, das hohe mechanische Stabilität verbunden mit einem hohen Bindevermögen für in Flüssigkeiten und Gasen enthaltenen Schadstoffe aufweist ohne dass organische Bindemittel oder anorganische Fremdstoffbindemittel zur Erlangung ausreichender mechanischer Stabilität eingesetzt werden müssen bzw. Anlagen, die mit derartigen Medien betrieben werden.

Die erfindungsgemäßen Kontakte bzw. Adsorptionsmittel/Reaktionsmittel, deren Bereitstellung, deren Verwendung sowie mit diesen beschickte Apparate lösen diese komplexe Aufgabe.

Zur Herstellung der erfindungsgemäßen Agglomerate wird man zunächst eine wässrige Suspension von feinteiligen Eisenoxihydroxiden der Phase α-FeOOH hersteltt indem Eisen (II)-hydroxide aus entsprechenden Eisen (II)-Salzlösungen in einem Überschluss von Natronlauge gefällt und anschliessend oxidiert werden, und dann das Wasser und darin gelöste Bestandteile auf zwei verschiedene Weisen entfernt.

### Methode 1:

Für Anwendungen, bei denen geringere Ansprüche an die mechanische Festigkeit der Granulate/Kontakte gestellt werden, entfernt man zunächst nur das Wasser, z.B. durch Verdampfung. Man erhält einen Rückstand, der neben dem feinteiligen Eisenoxid und/oder -hydroxid auch die gesamte Salzfracht enthält. Dieser Rückstand wird nach dem Trocknen in Wasser redispergiert, wozu nur relativ wenig Scherkraft angewendet werden muss. Diese Suspension wird anschließend filtriert und der Rückstand wird im wesentlichen salzfrei gewaschen. Der Filterkuchen, den man als Rückstand erhält, ist eine feste bis halbfeste Paste, die in der Regel einen Wassergehalt zwischen 10 und 90 Gew.-% besitzt.

Diese kann anschließend ganz oder teilweise entwässert werden, und das so erhaltene Material kann anschließend in die gewünschte Form und/oder Größe zerkleinert werden. Alternativ kann die Paste bzw. der Filterkuchen, gegebenenfalls nach einer Vortrocknung zur Erlangung eines dazu ausreichend festen Zustands, einer Formgebung und anschließenden (weiteren) Trocknung unter Erlangung eines stickigen Zustandes unterzogen werden. Die spätere Anwendung des Granulats bestimmt die bevorzugte Vorgehensweise bei seiner Herstellung und ist für den Fachmann auf dem jeweiligen Anwendungsgebiet durch einfache orientierende Vorversuche bestimmbar. Sowohl der unmittelbar getrocknete Filterkuchen als auch die getrockneten Formkörper können dann als Kontakt bzw. Adsorber eingesetzt werden.

### Methode 2:

Für Anwendungen, bei denen höhere Ansprüche an die mechanische Festigkeit der Granulate/Kontakte gestellt werden, wird die Suspension filtriert und der Rückstand im wesentlichen salzfrei gewaschen. Der Filterkuchen, den man als Rückstand erhält, ist eine feste bis halbfeste Paste. Diese kann anschließend ganz oder teilweise entwässert werden, und das so erhaltene Material kann anschließend in die gewünschte Form und/oder Größe zerkleinert werden. Alternativ kann die Paste bzw. der Filterkuchen, gegebenenfalls nach einer Vortrocknung zur Erlangung eines dazu ausreichend festen Zustands, einer Formgebung und anschließenden (weiteren) Trocknung unter Erlangung eines stückigen Zustandes unterzogen werden. Die spätere Anwendung des Granulats bestimmt die bevorzugte Vorgehensweise bei seiner Herstellung und ist für den Fachmann auf dem jeweiligen Anwendungsgebiet durch einfache orientierende Vorversuche bestimmbar. Sowohl der unmittelbar getrocknete Filterkuchen als auch die getrockneten Formkörper können dann als Kontakt bzw. Adsorber eingesetzt werden.

Die gemäß Methode 1 erhaltenen Produkte sind zwar mechanisch weniger stabil, jedoch ist die Filtration leichter und schneller durchführbar. Außerdem können die so isolierten feinteiligen Pigmente sehr einfach in z.B. Lacke und Polymere eingearbeitet werden, weil man dazu erheblich weniger Scherkraft braucht als dies zur Einarbeitung der gemäß Methode 2 erhaltenen feinteiligen Pigmente erforderlich ist

Das eingesetzte feinteilige Eisenoxihydroxid hat eine Teilchengröße von bis zu 500 nm, vorzugsweise bis zu 100 nm, besonders bevorzugt 4 bis 50 nm und eine BET-Oberfläche von 50 bis 500 m²/g, bevorzugt von 80 bis 200 m²/g.

Die Primärteilchengröße wurde aus rasterelektronenmikroskopischen Aufnahmen z. B. bei einer Vergrößerung 60000:1 durch Ausmessen bestimmt (Gerät: XL30 ESEM FEG, Fa. Philips). Sind die Primärteilchen nadelförmig, wie z. B. in der Phase von α-FeOOH, lässt sich als Mass für die Teilchengröße die Nadelbreite angeben. Man beobachtet bei nanoteiligen α-FeOOH- Teilchen Nadelbreiten von bis zu 100 nm, in der Hauptsache jedoch zwischen 4 und 50 nm. α-FeOOH Primärteilchen haben üblicherweise ein Länge:Breite-Verhältnis von 5:1 bis zu 50:1, typischerweise von 5:1 bis 20:1. Durch Dotierungen oder spezielle Reaktionsführung lassen sich die Nadelformen jedoch in ihrem Länge:Breite-Verhältnis variieren.

Nach den Methoden 1) und 2) erhältliche Produkte können anschließend beipielsweise durch Schroten oder Mahlen weiter zerkleinert werden. Da sich die Produkte bei ihrem ersten Kontakt mit Wasser, beispielsweise beim ersten Füllen eines frisch beschickten Adsorberapparats mit Wasser, jedoch autogen zerkleinern, wird dies in der Regel nicht erforderlich sein.

Als andere Methode, Granulate zu erzeugen, hat sich die Granulierung einer halbfeuchten Paste bewährt. Dabei formt man Pellets bzw. Stränge aus einer halbfesten Paste z. B. Mittels eines einfachen Lochblechs, einer Walzenpresse oder eines Extruders und trocknet diese entweder gleich oder bringt diese Extrudate mittels eines Sphäronizers zusätzlich in eine Kugel- oder Granulatform. Die noch feuchten Kügelchen bzw. granulate können im Nachhinein auf einen beliebigen Feuchtigkeitsgehalt nachgetrocknet werden. Damit die Granulate nicht zusammenbacken, empfiehlt sich ein Restfeuchtegehalt von < 50 %. Eine solche Kugelform kann für den Einsatz in Festbettadsorbern wegen der dadurch besseren Schüttung im Adsorberbehälter gegenüber geschroteten Granulaten oder Pellets in Strangform von Vorteil sein.

Generell ist es möglich, zur Verbesserung des Filtrationsverhaltens der Suspensionen übliche filtrationsverbessernde Maßnahmen anzuwenden wie sie z.B. in Solid-Liquid Filtration and Separation Technology, A. Rushton, A.S., Ward R.G., Holdich, 2. Aufl. 2000, Wiley VCH, Weinheim sowie Handbuch der Industiellen Fest/Flüssig-Filtration, H. Gasper, D. Öchsle, E. Pongratz, 2. Aufl. 2000, Wiley-VCH Weinheim beschrieben sind. So können den Suspensionen zum Beispiel Flockungsmittel zugesetzt werden.

Neben den Eisenoxihydroxiden auch Eisencarbonate verwendet werden.

Die erfindungsgemäßen Produkte können einer Trocknung an Luft, und/oder im Vakuum, und/oder im Trockenschrank und/oder auf Bandtrocknern oder durch Sprühtrocknung, bevorzugt bei Temperaturen von -25 bis 250° C, besonders bevorzugt bei 60 bis 120° C, unterzogen werden.

Die erfindungsgemäßen Produkte haben vorzugsweise einen Restwassergehalt von weniger als 20 Gew.-%.

Es wurde gefunden, dass die so erhaltenen Stücke bzw. Granulate eine hohe Bindekapazität für in Gewässern, Flüssigkeiten oder Gasen enthaltene Schadstoffe besitzen und sie zudem eine ausreichend hohe Stabilität gegenüber durch strömende Medien hinsichtlich mechanischer oder hydraulischer Beanspruchung besitzen.

Insbesondere überrascht, dass sich feinteilige Eisenoxihydroxide mit hohen spezifischen Oberflächen beim Trocknen in sehr harte Agglomerate verfestigen, die ohne Zusatz von Bindemittel eine hohe mechanische Abriebsfestigkeit und eine hohe hydraulische Stabilität gegenüber dem Kontakt mit durchströmenden Wasser besitzen, und die ein hohes Bindevermögen für die in dem Wasser enthaltenen Schad- und Spurenstoffe haben.

Zum erfindungsgemäßen Einsatz von feinteiligen Eisenoxihydroxiden eignen sich z.B. transparente Eisenoxihydroxidpigmente mit einer mittleren Teilchengröße von kleiner 0.1 µm und spezifischen Oberflächen von mehr als 80 m².

Die Herstellung von gelben feinteiligen Eisenoxihydroxidpigmenten (z.B. Goethit) im sauren oder alkalischen pH-Bereich, sogenannte saure bzw. alkalische Keime, ist Stand der Technik. Auch die Herstellung von anderen feinteiligen Eisenoxid- bzw. Eisenoxihydroxidpigmenten ist Stand der Technik.

Die Herstellung transparenter Eisenoxihydroxide ist z.B. gemäß DE-A 2 603 050 aus BIOS 1144, S. 29 bis 33 oder aus FIAT 814, S. 1 bis 26 bekannt.

Feinteilige gelbe Eisenoxihydroxidpigmente werden in der Regel durch Fällung von Eisen(II)-hydroxiden oder -carbonaten aus entsprechenden Eisen(II)-salzlösungen wie z. B. FeSO₄, FeCl₂ in Reinform oder als Beizereilösungen im sauren oder alkalischen pH-Bereich und anschließender Oxidation zu Eisen(III)-oxihydroxiden synthetisiert (s. u. a. G. Buxbaum, Industrial Inorganic Pigments, VCH Weinheim, 2. Auflage, 1998, S. 231ff). Die Oxidation des zweiwertigen zum dreiwertigen Eisen erfolgt bevorzugt mit Luft, dabei ist eine intensive Begasung von Vorteil. Auch die Oxidation mit H₂O₂ führt zu feinteiligen Eisenoxihydroxiden. Die Temperatur bei der Fällung und bei der Oxidation sollte möglichst tief gewählt werden, um zu sehr feinteiligen Gelbpigmenten zu gelangen. Sie liegt vorzugsweise zwischen 15° C und 45° C. Als alkalisches Fällungsmittel wird bevorzugt NaOH eingesetzt.

Durch geeignete Wahl der Fäll- und Oxidationsbedingungen lassen sich nanoteilige α-, Phasen und Mischphasen von Eisenoxihydroxiden darstellen, die eine hohe spezifische Oberfläche aufweisen, so dass die Nanoteilchen im trockenen Zustand zusammenbacken und in zerkleinerter Form eine hohe Stabilität gegenüber mechanischem und fluidmechanischen Abrieb besitzen.

Von praktisch besonders vorteilhaftem Nutzen erweist sich die Darstellung der feinteiligen Eisenoxihydroxide durch gleichzeitige rasche Behandlung von Eisen(II)-salzlösungen mit NaOH und Luft, weil diese Darstellungsmethode zu besonders feinteiligen Eisen(oxi)hydroxiden und damit zu einer hohen Stabilität des Fertiggutes neben hoher Adsorptionskraft fühlt

Um die gefällten Pigmente in Richtung der notwendigen hohen Feinteiligkeit zu steuern, werden die Fällungen, z. B. von gelbem α-FeOOH, wie in den Patenten US-A 2 558 303 und US-A 2 558 304 beschrieben, im alkalischen pH-Bereich mit Alkalicarbonaten als Fällungsmittel durchgeführt und in der Regel Modifikatoren zugesetzt, wie z.B. SiO₂, Zink-, Aluminium- oder Magnesiumsalze, Hydroxicarbonsäuren, Phosphate, Metaphosphate. So hergestellte Produkte sind in US-A 2 558 302 beschrieben. Derartige Keimmodifikatoren stören behindern die spätere Aufarbeitung, Rezyclierung oder weitere andersartige Verwendung der erfindungsgemäßen Adsorbentien nicht. Bei den Fällverfahren im wässrigen Medium führen nach bisherigem Wissen Fällungen im alkalischen Milieu zu weniger hart agglomerierten Pulvern als solche im sauren.

Keimmodifikatoren haben jedoch u. a. den Vorteil, dass man selbst bei höheren Reaktionstemperaturen trotzdem eine ausreichende Feinteiligkeit erreichen kann.

DE-A 4 235 945 berichtet über die Darstellung feinteiliger Eisenoxide nach einem Fällverfahren im sauren pH-Bereich und ohne Modifikatoren.

DE-A 4 434 969 beschreibt ein Verfahren, mit dem hochtransparente gelbe, chemisch reine Eisenoxidpigmente durch Nachbehandlung derselben mit Natronlauge hergestellt werden können.

In der DE-A 4 434 972 wird über hochtransparente, gelbe Eisenoxidpigmente der α-FeOOH-Modifikation mit einer spezifischen Oberfläche von mehr als 100 m²/g mit hoher Temperaturstabilität berichtet.

DE-A 4 434 973 beschreibt hochtransparente gelbe Eisenoxidpigmente, die über die Verfahrensschritte Keimfällung im sauren pH-Bereich, Keimoxidation, Keimreifung und Pigmentaufbau hergestellt werden.

Dadurch, dass Eisenoxihydroxide jeweils in Reinform oder in beliebiger Mischung durch die bekannten Fällungs- und Oxidationsreaktionen aus Eisen(II)-salzlösungen hergestellt werden, das entstandene Eisenoxihydroxid, gegebenenfalls nach einer Nachbehandlung, aus der Suspension durch Filtration von der Salzlösung abgetrennt und weitgehend salzfrei, vorzugsweise bis zu einer Restleitfähigkeit von <5 mS/cm, gewaschen wird, der feste oder halbfeste Filterkuchen so wie er ist, oder gegebenenfalls nach einer mechanischen Formgebung, anschließend einer Trocknung unter Erlangung eines festen Zustandes unterzogen wird, erhält man ein mechanisch hochfestes Material, welches eine hohe Bindekapazität für die üblicherweise in Abwässern oder Abgasen enthaltenen Schadstoffe aufweist.

Die Trocknung erfolgt zweckmäßig bei Temperaturen bis zu 250°C. Auch eine Vakuum- oder Gefriertrocknung des Materials ist möglich. Die Korngröße des Materials ist beliebig, sie liegt vorzugsweise zwischen 0,2 und 40 mm, besonders bevorzugt zwischen 0,2 bis 20 mm. Diese kann erreicht werden durch mechanische Formgebung des halbfesten, pastösen Filterkuchens vor der Trocknung durch eine Granulier- oder Pelletieranlage oder in einer Strangpresse zu Formkörpern mit einer Größe im Bereich zwischen 0,2 und 20 mm und anschließender Trocknung an der Luft, auf einem Bandtrockner oder in einem Trockenschrank, und/oder durch mechanisches Zerkleinern auf die gewünschte Korngröße nach der Trocknung.

Gegenüber dem Stand der Technik handelt es sich bei den beschriebenen Produkten, dem Verfahren zur ihrer Verstellung und ihrer Verwendung um eine Verbesserung. Die erfindungsgemäßen Granulate auf Basis feinteiliger Eisenoxihydroxide sind im Gegensatz zu solchen aus grobteiligen Eisenoxihydroxiden und/oder -oxiden erheblich belastbarer und weisen somit eine viel größere Abriebsstabilität gegenüber mechanischer und hydraulischer Beanspruchung auf. Sie können direkt als solche eingesetzt werden. Selbst auf das Zerkleinern oder Schroten der zunächst erhaltenen rohen Trockensubstanz aus Filterkuchen oder Strangpressen kann z.B. bei der Anwendung in Adsorberanlagen zur Wasserreinigung verzichtet werden, da sich die groben Stücke bei ihrem Kontakt mit Wasser selbständig zerkleinern. Hierbei entsteht eine statistische Korngrößenverteilung, jedoch keine Partikel einer Größe, die in nennenswertem Maße durch das strömende Medium aus dem Adsorber ausgetragen werden.

Auf eine separate Granulierung, wie sie beim Einsatz herkömmlicher Eisenoxihydroxiden in Form (rieselfähiger) Pulver erforderlich wäre, entweder unter Zuhilfenahme substanzfremder Bindmittel oder höchster Linienkräfte beim Kompaktieren, kann völlig verzichtet werden.

Erfindungsgemäß können die Suspensionen der feinteiligen Eisenoxihydroxide bzw. Eisenoxide auch mit gewöhnlichen pulverförmigen Eisenoxihydroxiden bzw. Eisenoxiden versetzt werden. Die jeweiligen Mengen werden durch die Eigenschaften dieser pulverförmigen Eisenoxihydroxide bzw. Eisenoxide und die an das erfmdungsgemäße Produkt gestellten Anforderungen bezüglich seiner mechanischen Stabilität und Abriebfestigkeit bestimmt. Der Zusatz von pulverförmigen Pigmenten wird in der Regel zwar die mechanische Festigkeit der erfindungsgemäßen Produkte verringern, jedoch wird die Filtration der feinteiligen Suspensionen erleichtert. Der auf dem jeweiligen Anwendungsgebiet tätige Fachmann wird durch wenige orientierende Versuche das für seinen Anwendungszweck optimale Mischungsverhältnis ermitteln können.

Die nanoteiligen Keime werden erfindungsgemäß in einem Überschuss an Natronlauge hergestellt.

Besonders bevorzugt werden die erfindungsgemäßen Agglomerate bei der Reinigung von Flüssigkeiten, insbesondere zur Entfernung von Schwermetallen, eingesetzt. Eine in diesem technischen Gebiet bevorzugte Anwendung ist die Dekontamination von Wasser, insbesondere von Trinkwasser. In jüngster Zeit wird der Entfernung von Arsen aus Trinkwasser besondere Aufmerksamkeit gewidmet. Die erfindungsgemäßen Granulate eignen sich hierzu hervorragend, da selbst die niedrigen von der US-Behörde EPA festgesetzten Grenzwerte durch die Verwendung der erfindungsgemäßen Granulate nicht nur eingehalten, sondern sogar unterschritten werden können.

Dazu können die Granulate in herkömmliche Adsorberapparaten eingesetzt werden, wie sie derzeit schon, z.B. mit Aktivkohle beschickt, zur Entfernung von Schadstoffen anderer Art in Gebrauch sind. Ein Batchbetrieb, beispielsweise in Zisternen oder ähnlichen Behältnissen, die gegebenenfals mit Rührwerken ausgestattet sind, ist zwar auch möglich. Der Einsatz in kontinuierlich betriebenen Anlagen wie Durchflußadsorbem ist jedoch bevorzugt.

Da zur Trinkwasser aufzubereitendes Rohwasser üblicherweise auch organische Verunreinigungen wie Algen und ähnliche Organismen enthält, belegt sich die Oberfläche von Adsorbern, insbesondere die äußere Oberfläche von granulatförmigem Adsorbens, während des Einsatzes mit zumeist schleimigen Ablagerungen, die den Zutritt des Wassers und damit die Adsorption von zu entfernenden Inhaltsstoffen erschweren oder gar verhindern. Aus diesem Grund werden die Adsorber-Apparate von Zeit zu Zeit mit Wasser rückgespült, was vorzugsweise während Zeiten niedrigen Wasserverbrauchs (s. oben) an einzelnen aus dem Betrieb genommenen Apparaten durchgeführt wird. Hierbei wird das Adsorbens aufgewirbelt, und durch die hiermit verbundene mechanische Beanspruchung der Oberfläche wird der unerwünschte Belag entfernt und entgegen der Fließrichtung im Nutzbetrieb ausgetragen. Das Waschwasser wird üblicherweise einer Kläranlage zugeführt. Hierbei bewähren sich die erfindungsgemäßen Agglomerate ganz besonders gut, da deren hohe Festigkeit eine Reinigung in kurzer Zeit ermöglicht, ohne dass nennenswerte Verluste an Adsorbermaterial zu verzeichnen wären bzw. das dem Abwasser zugeführte Rückspülwasser reich an ausgetragenem Adsorbermaterial, gegebenenfalls schon hoch mit Schwermetallen beladen, ist.

Da die erfindungsgemäßen Agglomerate frei von artfremden Bindmitteln sind, ist das Material nach Gebrauch vergleichsweise einfach zu entsorgen. So kann das adsorbierte Arsen z.B. in speziellen Apparaturen thermisch oder chemisch entfernt werden, und man erhält als reinen Stoff ein Eisenoxidpigment, welches entweder zum Zweck der gleichen Anwendung rezycliert oder herkömmlichen Pigmentanwendungen zugeführt werden kann. Je nach Anwendung und gesetzlichen Bestimmungen kann der Adsorberinhalt auch ohne die vorherige Entfernung der Schwermetalle beispielsweise als Pigment zur Einfärbung dauerhafter Konstruktionsmaterialien wie Beton verwendet werden, da die dem Trinkwasser entzogenen Schwermetalle auf diese Weise dauerhaft immobilisiert und dem Wasserkreislauf entzogen werden.

Daher sind auch Wasseraufbereitungsanlagen bzw. Wasserwerke, in denen mit den erfindungsgemäßen Agglomerate beschickte Apparate betrieben werden ebenso Gegenstand der vorliegenden Erfindung wie Verfahren zur Dekontamination von Wasser unter Verwendung derartiger Apparate sowie derartige Apparate selbst.

Für viele Anwendungen, insbesondere solchen, bei denen eine maximale mechanische Festigkeit der Agglomerate nicht erforderlich ist, ist der Zusatz von pulverförmigen Pigmenten bei der Herstellung der erfindungsgemäßen Agglomerate eine bevorzugte Ausführungsform.

So kann beispielsweise eine Keimsuspension nach Beispiel 2 der vorliegenden Anmeldung mit bis zu 40 Gew.-% handelsüblichen Goethits (Bayferrox^{®} 920, Bayer AG, Leverkusen DE) versetzt werden, wenn die erhaltenen erfindungsgemäßen Granulate zur Entfernung von Arsen aus Trinkwasser in von Wasser durchströmten Adsorbern eingesetzt werden sollen.

Die Bestimmung der spezifischen Oberfläche der erfindungsgemäßen Produkte nach BET erfolgt über das Trägergasverfahren (He:N₂=90:10) nach der Einpunkt-Methode, gemäß DIN 66131 (1993). Vor der Messung wird die Probe 1 h bei 140 °C im trockenen Stickstoffstrom ausgeheizt.

Zur Messung der Adsorption von Arsen(III) und Arsen(V) werden in einer 5L PE-Flasche über einen bestimmten Zeitraum 3L einer wässrigen Lösung von NaAsO₂ oder Na₂HAsO₄ mit der jeweils angegebenen Konzentration von ca. 2-3 mg/L Arsen mit 3 g der zu untersuchenden Probe behandelt und dabei die Flasche auf rotierenden Walzen in Bewegung versetzt. Die Adsorptionsgeschwindigkeit von As-Ionen auf Eisenhydroxid über diesen bestimmten Zeitraum, z.B. eine Stunde, wird angegeben mit mg(As^{3+/5+})/g(FeOOH)•h aus der Differenz zu den in Lösung verbleibenden As^{3+/5+}-Ionen.

Zur Messung der Adsorption von Sb³⁺, Sb⁵⁺, Hg²⁺, Pb³⁺, Cr⁶⁺, Cd²⁺-Ionen verfährt man nach dem gleichen Muster, und zwar stellt man sich die gewünschten Konzentrationen durch Auflösen entsprechender Mengen von Sb₂O₃, KSb(OH)₆, PbCl₂, NaCrO₄, CdCl₂ in H₂O her und stellt den pH-Wert auf 7-9 ein.

Die As-, Sb-, Cd-, Cr-, Hg- bzw. Pb-Gehalte des beladenen Eisenoxihydroxids bzw. der Lösungen bestimmt man über die Massenspektrometrie (ICP-MS) gemäß DIN 38406-29 (1999) oder über optische Emissionsspektroskopie (ICP-OES) gemäß EN-ISO 11885 (1998) mit jeweils induktiv gekoppeltem Plasma als Anregungseinheit.

Die Beurteilung der mechanischen und hydraulischen Abriebsfestigkeit erfolgte nach folgender Methode: 10 g des zu untersuchenden Granulats mit Korngrößen >0.1 mm wurden in einem 500 mL Erlenmeyerkolben mit 150 mL VE-Wasser versetzt und auf einer Schüttelmaschine LabShaker (Modell Kühner, Fa. Braun) über einen Zeitraum von 30 Minuten mit 250 Umdrehungen/Minute in Rotation versetzt. Anschließend wurde von der Suspension mittels eines Siebs der Anteil >0.1 mm isoliert, getrocknet und gewogen. Das Gewichtsverhältnis zwischen Auswaage und Einwaage bestimmt den Abriebswert in %.

Die Erfindung wird im Folgenden anhand von Beispielen näher erläutert. Die Beispiele sollen der Illustration des Verfahrens dienen und stellen keine Einschränkung dar.

### Beispiele

### Beispiel 1:

237 L einer wässrigen Eisensulfatlösung mit einer Konzentration von 150 g/L FeSO₄ wurden bei 24 °C vorgelegt. Sodann wurden 113 L einer wässrigen NaOH-Lösung (227 g/L) rasch zugegeben und die hellblaue Suspension anschließend mit 40 L Luft pro Stunde und Mol Eisen über 1.5 Stunden oxidiert.

Die so erhaltene gelbe Suspension wurde über eine Filterpresse abfiltriert und der Feststoff bis zu einer Restleitfähigkeit des Filtrats von 1 mS/cm gewaschen. Dabei fiel der Filterkuchen als streich- und knetbare Paste an, welche auf Blechen im Umlufttrockenschrank bei 75° C bis zu einem Restfeuchtegehalt von 3 Gew.-% getrocknet wurde. Das getrocknete Material wurde anschließend durch Schrotung auf Teilchengrößen zwischen 0.5 und 2 mm gebracht. Die so erhaltenen harten Stücke wurden direkt in einem Adsorbertank eingesetzt.

Das Produkt bestand zu 100 % aus α-FeOOH mit extrem kurznadeligem Habitus, wobei die Nadeln zu festen makroskopischen Agglomeraten zusammengelagert waren. Aus der rasterelektronenmikroskopischen Aufnahme z. B. mit der Vergrößerung von 60000:1 wurde die Nadelbreiten durch Ausmessen zwischen 15 und 35 nm, die Nadellängen zwischen 150 und 350 nm bestimmt. Die Nadeln waren stark agglomeriert.

Die spezifische Oberfläche nach BET betrug 122 m²/g. Die Adsorptionsgeschwindigkeit bezüglich NaAsO₂ mit einer Ausgangskonzentration von 2.3 mg (As³⁺)/L betrug 2.14 mg(As³⁺)/g(FeOOH)•h, bezüglich Na₂HAsO₄ mit einer Ausgangskonzentration von 2.7 mg (As⁵⁺)/L betrug sie 2.29 mg(As⁵⁺)/g(FeOOH)•h.

### Beispiel 2 mit keimmodifikator, nich gemäß Anspruch 7)

800 L einer wässrigen Eisensulfatlösung mit einer Konzentration von 150 g/L FeSO₄ wurden bei 29° C vorgelegt und unter Rühren mit 147 L einer wässrigen NaOH-Lösung (300 g/L) in 20 Minuten versetzt. Die entstandene grau-blaue Suspension wurde anschließend zur Verkleinerung der Partikelgröße der Keime mit 2.16 kg eines Keimmodifikators in Form einer 57 %-igen wässrigen Glycolsäurelösung versetzt und 7 Stunden mit 38 L Luft je Stunde und Mol Eisen oxidiert.

Die dunkelbraune Suspension wurde über eine Filterpresse abfiltriert und der Feststoff bis zu einer Restleitfähigkeit des Filtrats von 1 mS/cm gewaschen. Der Filterkuchen wurde bei 70 °C im Umlufttrockenschrank bis zu einer Restfeuchte von 5 % getrocknet, und das sehr harte schwarzbraune Trockengut wurde über einen Walzenbrecher zu Korngrößen bis 2 mm geschrotet. Der Feinanteil < 0.2 mm wurde über ein Sieb abgetrennt.

Das Produkt bestand laut Röntgendiffraktogramm aus 100 % α-FeOOH. Aus der rasterelektronenmikroskopischen Aufnahme z. B. mit der Vergrößerung von 60000:1 wurde die Nadelbreiten durch Ausmessen zwischen 15 und 20 nm, die Nadellängen zwischen 50 und 80 nm bestimmt. Die Teilchen waren stark agglomeriert. Die spezifische Oberfläche nach BET betrug 202 m²/g. Die so erhaltenen Granulate wurden direkt ohne weitere Behandlung in einen Adsorbertank gefüllt.

Die Granulate zeigten ein ausgezeichnetes Adsorptionsverhalten für die in dem durchströmenden Wasser enthaltenen Schadstoffe und zeigten eine hohe Abriebsfestigkeit, insbesondere während der Adsorbertank rückgespült wird und infolgedessen die Granulate stark aufgewirbelt werden. Der Abriebswert betrug nach 30 Minuten lediglich 1 %.

Adsorptionsverhalten: Die Adsorptionsgeschwindigkeit gegenüber NaAsO₂ betrug mit einer Ausgangskonzentration von 2.4 mg (As³⁺)/L 1.0 mg(As³⁺/g(FeOOH)•h, gegenüber Na₂HAsO₄ mit einer Ausgangskonzentration von 2.8 mg (As⁵⁺)/L betrug sie 2.07 mg(As³⁺)/g(FeOOH)•h.

### Beispiel 3:

Eine nach Beispiel 2 erhaltene α-FeOOH-Suspension wurde nach zweistündiger Reifung bei 30° C unter Rühren mit 1.3 L einer wässrigen 300 g/L NaOH-Lösung versetzt und gleichzeitig mit 190 L Luft eine Stunde nachoxidiert. Das Produkt wurde wie im Beispiel 2 beschrieben aufgearbeitet. Es entstanden feinteilige Nadeln aus reinem α-FeOOH mit einer spezifischen Oberfläche nach BET von 130 m²/g. Aus der rasterelektronenmikroskopischen Aufnahme z. B. mit der Vergrößerung von 60000:1 wurde die Nadelbreiten durch Ausmessen zwischen 15 und 20 nm, die Nadellängen zwischen 50 und 90 nm bestimmt. Die Nadeln waren stark agglomeriert. Die Granulate erwiesen sich als mechanisch und hydraulisch sehr stabil, der Abriebswert betrug lediglich 3.9 %.

Adsorptionsverhalten: Die Adsorptionsgeschwindigkeit gegenüber NaAsO₂ mit einer Ausgangskonzentration von 2.3 mg/L betrug 1.1 mg(As³⁺/g(FeOOH)•h, gegenüber Na₂HAsO₄ mit einer Ausgangskonzentration von 2.8 mg/L betrug sie 1.7 mg(As³⁺)/g(FeOOH)•h.

### Beispiel 4:

306 L einer wässrigen NaOH-Lösung (45 g/L) wurden bei 31° C vorgelegt und unter Rühren rasch mit 43 L einer wässrigen Lösung von FeCl₂ (344 g/L) versetzt und anschließend mit 60 L Luft je Stunde und Mol Fe oxidiert. Die so erhaltene dunkelgelbe Suspension wurde wie in Beispiel 1 beschrieben aufgearbeitet.

Das Produkt bestand laut Röntgendiffraktogramm zu 100 % aus α-FeOOH. Aus der rasterelektronenmikroskopischen Aufnahme z. B. mit der Vergrößerung von 60000:1 wurde die Nadelbreiten durch Ausmessen zwischen 15 und 50 nm, die Nadellängen zwischen 100 und 200 nm bestimmt. Die Nadeln waren stark agglomeriert. Die spezifische Oberfläche nach BET betrug 132 m²/g.

Die so erhaltenen Granulate wurden ohne weitere Behandlung in einen Adsorbertank gefüllt. Die Granulate zeigten ein ausgezeichnetes Adsorptionsverhalten für die im Wasser enthaltenen Schadstoffe und zeigten eine hohe Abriebsfestigkeit, insbesondere während der Adsorbertank rückgespült wird und infolgedessen die Granulate stark aufgewirbelt werden. Der Abriebswert betrug nach 30 Minuten lediglich 12 Gew.-%.

Adsorptionsverhalten: Die Adsorptionsgeschwindigkeit gegenüber NaAsO₂ mit einer Ausgangskonzentration von 2.4 mg (As³⁺/L betrug 2.11 mg(As³⁺/g(FeOOH)•h, gegenüber Na₂HAsO₄ mit einer Ausgangskonzentration von 2.7 mg (As⁵⁺)/L betrug sie 2.03 mg(As⁵⁺)/g(FeOOH)•h.

### Beispiel 5

Es wurden 4096 kg NaOH (als Lösung mit ca. 300 g/L) vorgelegt und mit Wasser auf 40 m³ verdünnt. 4950 kg FeSO₄ werden mit Wasser zu 48.5 m³ Lösung gelöst, auf 15 °C abgekühlt und anschließend in 1 h zu der NaOH-Vorlage gepumpt. Die Suspension wurde dann mit 1500 m³/h Luft in ca. 2 h oxidiert. Ca. 2 m³ der Keimsuspension wurde auf einer Filterpresse bis zu einer Filtratleitfähigkeit < 1000 µS/cm gewaschen, der Filterkuchen bei 75 °C im Trockenschrank getrocknet und das getrocknete Material auf Korngrößen < 1.5 mm geschrotet. Der Feinanteil < 0.5 mm wurde über ein Sieb abgetrennt. Das so erhaltene Material hatte eine spezifische Oberfläche nach BET von 153 m²/g und bestand zu 100 % aus α-FeOOH. Aus der rasterelektronenmikroskopischen Aufnahme z. B. mit der Vergrößerung von 60000:1 wurde die Nadelbreiten durch Ausmessen zwischen 15 und 35 nm, die Nadellängen zwischen 50 und 100 nm bestimmt. Die Nadeln waren stark agglomeriert.

Adsorptionsverhalten: Die Adsorptionsgeschwindigkeit bezüglich NaAsO₂ mit einer Ausgangskonzentration von 2.7 mg (As³⁺)/L betrug 1.7 mg(As³⁺)/g(FeOOH)•h, bezüglich Na₂HAsO₄ mit einer Ausgangskonzentration von 2.8 mg (As⁵⁺)/L betrug sie 1.4 mg(As⁵⁺)/g(FeOO)•h.

### Beispiel 6

1600 g der nach Beispiel 5 dargestellten alkalischen Keimsuspension (2.7 % FeOOH) wurden bei Raumtemperatur unter Rühren mit einer wässrigen Lösung von FeSO₄ (100 g/L) bei gleichzeitiger Begasung mit 130 L/h Luft bis pH 8 versetzt. Die erhaltene Keimsuspension wird filtriert, gewaschen und der Filterkuchen bei 75 °C getrocknet und wie im Beispiel 5 auf Korngrößen zwischen 0.5 und 2 mm geschrotet. Das so erhaltene Material hatte eine spezifische Oberfläche nach BET von 163 m²/g und bestand laut Röntgendiffraktogramm zu 100 % aus α-FeOOH. Aus der rasterelektronenmikroskopischen Aufnahme z. B. mit der Vergrößerung von 60000:1 war zu sehen, dass die Nadeln stark agglomeriert sind. Adsorptionsverhalten: Die Adsorptionsgeschwindigkeit bezüglich NaAsO₂ mit einer Ausgangskonzentration von 2.7 mg (As³⁺)/L betrug 2.0 mg(As³⁺)/g(FeOOH)•h, bezüglich Na₂HAsO₄ mit einer Ausgangskonzentration von 2.7 mg (As⁵⁺)/L betrug sie 1.9 mg(As⁵⁺)/g(FeOOH)•h, bei KSb(OH)₆ (Ausgangskonzentration 3.0 mg (Sb⁵⁺)/L) betrug die Adsorption 2.5 mg (Sb⁵⁺)/g (FeOOH)•h, bezüglich Na₂CrO₄ (Ausgangskonzentration 47 µg (Cr⁶⁺)/L) wurden 42 µg (Cr⁶⁺)/g(FeOOH)•h adsorbiert, bei PbCl₂ (Ausgangskonzentration 0.94 mg (Pb²⁺)/L wurden 0.46 mg (Pb²⁺)/ g(FeOO)•h adsorbiert.

### Beispiel 7

6.4 L einer wässrigen Lösung von NaOH (100 g/L) wurden bei 29°C unter Rühren vorgelegt und bei gleichzeitiger Luftzufuhr mit 12.2 L einer wässrigen Eisen (II)sulfat-lösung (100 g/L) bis pH 9 versetzt. Die so erhaltene Suspension wurde wie im Beispiel 1 aufgearbeitet. Das Material hatte eine spezifische Oberfläche nach BET von 251 m²/g und bestand laut Röntgendiffraktogramm zu 100 % aus α-FeOOH. In der rasterelektronenmikroskopischen Aufnahme sind kurze, stummelige Nadeln zu erkennen, die stark agglomerieren. Abriebsverhalten: 5 %.

Adsorptionsverhalten: Die Adsorptionsgeschwindigkeit bezüglich NaAsO₂ mit einer Ausgangskonzentration von 2.7 mg (As³⁺)/L betrug 1.1 mg(As³⁺)/g(FeOOH)•h, bezüglich Na₂HAsO₄ mit einer Ausgangskonzentration von 2.7 mg (As⁵⁺)/L betrug sie 1.0 mg(As⁵⁺)/g(FeOOH)•h.

### Beispiel 8

Es wurden 3100 kg NaOH (als Lösung mit 100 g/L) in einem Rührkessel vorgelegt und mit kaltem Wasser auf 31 m³ verdünnt. Die Temperatur dieser NaOH-Lösung betrug 26 °C.
3800 kg FeSO₄ werden mit Wasser zu 38 m³ Lösung gelöst, auf 13-14 °C abgekühlt und anschließend unter Rühren in 40 min zu der NaOH-Vorlage gepumpt. Die entstehende Suspension wurde dann unter Rühren mit 2500 m³/h Luft in 75 min oxidiert.
Anschliessend gibt man 18,2 m³ einer FeSO₄-Lösung (100 g/L) in 150 L/min unter Begasung mit 1300 m³/h Luft unter Rühren zu.

Die Keimsuspension wurde auf einer Filterpresse bis zu einer Filtratleitfähigkeit < 1 mS/cm gewaschen, die Filterpaste durch ein Lochblech gedrückt und auf einem Bandtrockner bis zu einer Restfeuchte von < 20 Gew.-% getrocknet. Das so getrocknete Material wurde auf Korngrößen < 2 mm geschrotet. Der Feinanteil < 0.5 mm wurde über ein Sieb abgetrennt.

Das Produkt bestand laut Röntgendiffraktogramm aus 100 % α-FeOOH. Aus der rasterelektronenmikroskopischen Aufnahme z. B. mit der Vergrößerung von 60000:1 wurde die Nadelbreiten durch Ausmessen zwischen 15 und 35 nm, die Nadellängen zwischen 50 und 300 nm bestimmt. Die Teilchen waren stark agglomeriert. Die spezifische Oberfläche nach BET betrug 145 m²/g. Der Abriebswert betrug nach 30 min lediglich 5,1 Gew. -%.

## Patentansprüche

1. Agglomerate von feinteiligem Eisenoxihydroxid der Phase α-FeOOH in stückiger Form mit einer Korngröße von 0,2 bis 40 mm, wobei das feinteilige Eisenoxihydroxid eine BET-Oberfläche von 50 bis 500 m²/g aufweist.

2. Agglomerate nach Anspruch 1, **dadurch gekennzeichnet, dass** das α-FeOOH eine Nadelbreite von 4 nm bis 50 nm aufweist.

3. Von Medien durchströmbare Apparate, **dadurch gekennzeichnet, dass** sie Agglomerate gemäß den Ansprüchen 1 oder 2 enthalten.

4. Apparate gemäß Anspruch 3, **dadurch gekennzeichnet, dass** es sich bei dem von Medien durchströmbaren Apparaten um Durchflussadsorber handelt.

5. Wasseraufbereitungsanlagen umfassend Apparate gemäß Ansprüchen 3 oder 4.

6. Wasserwerke umfassend Wasseraufbereitungsanlagen gemäß Anspruch 5.

7. Verfahren zur Herstellung von Agglomeraten gemäß den Ansprüchen 1 oder 2, **dadurch gekennzeichnet, dass** man zunächst eine wässrige Suspension von feinteiligen Eisenoxihydroxiden der Phase α-FeOOH herstellt indem Eisen (II) -hydroxide aus entsprechenden Eisen (II) -Salzlösungen in einem Überschuss von Natronlauge gefällt und anschliessend oxidiert werden, und dann das Wasser und darin gelöste Bestandteile entfernt, indem man
entweder
zunächst nur das Wasser, vorzugsweise durch Verdampfung, aus der Suspension entfernt und den so erhaltenen Rückstand in Wasser redispergiert, die erhaltene Suspension filtriert, den Rückstand vorzugsweise salzfrei wäscht, den als Rückstand erhaltenen Filterkuchen ganz oder entwässert und das so erhaltene Material in die gewünschte Form und/oder Größe zerkleinert oder teilweise zur Erlangung eines ausreichend festen Zustands entwässert und die so erhaltene Paste einer Formgebung und anschließenden weiteren Trocknung unter Erlangung eines stückigen Zustandes unterzieht
oder
die Suspension filtriert und den Rückstand salzarm wäscht, den Filterkuchen in Form einer festen bis halbfesten Paste, den man als Rückstand erhält, entweder ganz entwässert und das so erhaltene Material anschließend in die gewünschte Form und/oder Größe zerkleinert oder teilweise zur Erlangung eines ausreichend festen Zustands entwässert und die so erhaltene Paste einer Formgebung und anschließenden weiteren Trocknung unter Erlangung eines stückigen Zustandes unterzieht
und das so erhaltene Material gegebenenfalls einer weitergehenden Zerteilung durch Mahlen oder Schroten unterzieht.

8. Verfahren nach Anspruch 7, **dadurch gekennzeichnet,**
**dass** die Oxidation mit Luft erfolgt.

9. Verfahren nach Anspruch 7 oder 8, **dadurch gekennzeichnet dass** die Temperatur bei der Fällung und der Oxidation zwischen 15°C und 45°C liegt.

10. Verwendung der Agglomerate gemäß Ansprüchen 1 oder 2 und den Apparaten gemäß Ansprüchen 3 und 4 zur Reinigung von Gasen.

11. Verwendung der Agglomerate gemäß Ansprüchen 1 oder 2 und den Apparaten gemäß Ansprüchen 3 oder 4 zur Reinigung von Flüssigkeiten.

12. Verwendung der Agglomerate gemäß Ansprüchen 1 oder 2 und den Apparaten gemäß Ansprüchen 3 und 4 den Wasseraufbereitungsanlagen gemäß Anspruch 5, sowie den Wasserverten gemässt Anspruch 6 zur Wasseraufbereitung.

13. Verwendung der Agglomerate gemäß Ansprüchen 1 oder 2 und den Apparaten gemäß Ansprüchen 3 und 4 den Wasseraufbereitungsanlagen gemässt Anspruch 5, sowie den Waserverten gemäß Anspruch 6 zur Entfernung von Schwermetallen, sowie Phosphor-, Antimon-, beryllium Selen-, Tellur- sowie Cyanoverbindungen aus phor-, Antimon-, Beryllium-, Selen-, Tellur- sowie Cyanoverbindungen aus Wasser.

14. Verwendung der Agglomerate von gemäß Ansprüchen 1 oder 2 und den Apparaten gemäß Ansprüchen 3 und 4 den Wasseraufbereitungsanlagen gemässt Anspruch 5, sowie den Wasserwerten gemässt Anspruch 6 zur Entfernung von Arsenverbindungen aus Wasser.

## Claims

1. Agglomerates of finely divided iron oxyhydroxide of the phase α-FeOOH in piece form having a particle size of 0.2 to 40 mm, wherein the finely divided iron oxyhydroxide has a BET surface area of 50 to 500 m²/g.

2. Agglomerates according to Claim 1, **characterized in that** α-FeOOH has a needle width of 4 nm to 50 nm.

3. Apparatuses through which media can flow, **characterized in that** said apparatuses contain agglomerates according to Claim 1 or 2.

4. Apparatuses according to Claim 3, **characterized in that** the apparatuses through which media can flow are continuous-flow adsorbers.

5. Water treatment plants comprising apparatuses according to Claims 3 or 4.

6. Waterworks comprising water treatment plants according to Claim 5.

7. Process for producing agglomerates according to Claims 1 or 2, **characterized in that** an aqueous suspension of finely divided iron oxyhydroxides of the phase α-FeOOH is first prepared by precipitating iron(II) hydroxides from corresponding iron(II) salt solutions in an excess of sodium hydroxide solution and subsequently oxidizing them, and the water and constituents dissolved therein are then removed by
either
first removing only the water from the suspension, preferably by evaporation, and redispersing in water the resultant residue, filtering the resultant suspension, washing the residue preferably salt-free, dewatering the filter cake obtained as residue entirely or partially and comminuting the resultant material to the desired shape and/or size or partially dewatering it to achieve a sufficiently solid state and subjecting the resultant paste to shaping and subsequent further drying, achieving a particulate state
or
filtering the suspension and washing the residue to be low in salt, dewatering the filter cake in the form of a solid to semisolid paste which is obtained as residue either entirely and then comminuting the resultant material to the desired shape and/or size, or partially dewatering the filter cake to achieve a sufficiently solid state and subjecting the resultant paste to shaping and subsequent further drying, achieving a particulate state,
and subjecting the resultant material if appropriate to a further comminution by grinding or coarse grinding.

8. Process according to Claim 7, **characterized in that** the oxidation proceeds using air.

9. Process according to Claim 7 or 8, **characterized in that** the temperature during the precipitation and the oxidation is between 15°C and 45°C.

10. Use of the agglomerates according to Claims 1 or 2 and the apparatuses according to Claims 3 and 4 for purifying gases.

11. Use of the agglomerates according to Claims 1 or 2 and the apparatuses according to Claims 3 or 4 for purifying liquids.

12. Use of the agglomerates according to Claims 1 or 2 and the apparatuses according to Claims 3 and 4, the water treatment plants according to Claim 5, and also the waterworks according to Claim 6 for water treatment.

13. Use of the agglomerates according to Claims 1 or 2 and the apparatuses according to Claims 3 and 4, the water treatment plants according to Claim 5, and also the waterworks according to Claim 6 for removing heavy metals and phosphorus compounds, antimony compounds, beryllium compounds, selenium compounds, tellurium compounds and cyano compounds from water.

14. Use of the agglomerates according to Claims 1 or 2 and the apparatuses according to Claims 3 and 4, the water treatment plants according to Claim 5, and also the waterworks according to Claim 6 for removing arsenic compounds from water.

## Revendications

1. Agglomérats d'oxyhydroxyde de fer finement divisé de la phase α-FeOOH sous forme agglomérée avec une taille de grain de 0,2 à 40 mm, l'oxyhydroxyde de fer finement divisé présentant une surface BET de 50 à 500 m²/g.

2. Agglomérats selon la revendication 1, **caractérisés en ce que** l'α-FeOOH présente une largeur d'aiguille de 4 nm à 50 nm.

3. Appareils traversables par des milieux, **caractérisés en ce qu'**ils contiennent des agglomérats selon les revendications 1 ou 2.

4. Appareils selon la revendication 3, **caractérisés en ce que** les appareils traversables par des milieux sont des adsorbeurs d'écoulement.

5. Unités de conditionnement de l'eau comprenant des appareils selon les revendications 3 ou 4.

6. Centres de distribution de l'eau comprenant des unités de conditionnement de l'eau selon la revendication 5.

7. Procédé de fabrication d'agglomérats selon les revendications 1 ou 2, **caractérisé en ce qu'**une suspension aqueuse d'oxyhydroxyde de fer finement divisé de la phase α-FeOOH est tout d'abord fabriquée par précipitation d'hydroxydes de fer (II) à partir de solutions salines de fer (II) correspondantes dans un excès d'hydroxyde de sodium et oxydation ultérieure, puis l'eau et les constituants dissous dans celle-ci sont éliminés,
soit en éliminant tout d'abord uniquement l'eau, de préférence par évaporation, de la suspension et en redispersant le résidu ainsi obtenu dans de l'eau, en filtrant la suspension obtenue, en lavant le résidu pour qu'il soit de préférence exempt de sel, en déshydratant en totalité le gâteau de filtration obtenu en tant que résidu et en broyant le matériau obtenu sous la forme et/ou taille souhaitée, ou en le déshydratant partiellement pour atteindre un état suffisamment solide et en soumettant la pâte ainsi obtenue à un façonnage, puis à un séchage supplémentaire pour atteindre un état aggloméré,
soit en filtrant la suspension et en lavant le résidu pour qu'il soit pauvre en sel, en déshydratant en totalité le gâteau de filtration sous la forme d'une pâte solide à semi-solide obtenue en tant que résidu, puis en broyant le matériau ainsi obtenu sous la forme et/ou taille souhaitée, ou en le déshydratant partiellement pour atteindre un état suffisamment solide et en soumettant la pâte ainsi obtenue à un façonnage, puis à un séchage supplémentaire pour atteindre un état aggloméré,
et le matériau ainsi obtenu est éventuellement soumis à une fragmentation supplémentaire par broyage ou concassage.

8. Procédé selon la revendication 7, **caractérisé en ce que** l'oxydation a lieu avec de l'air.

9. Procédé selon la revendication 7 ou 8, **caractérisé en ce que** la température lors de la précipitation et de l'oxydation est comprise entre 15 °C et 45 °C.

10. Utilisation des agglomérats selon les revendications 1 ou 2 et des appareils selon les revendications 3 et 4 pour la purification de gaz.

11. Utilisation des agglomérats selon les revendications 1 ou 2 et des appareils selon les revendications 3 ou 4 pour la purification de liquides.

12. Utilisation des agglomérats selon les revendications 1 ou 2 et des appareils selon les revendications 3 et 4, des unités de conditionnement de l'eau selon la revendication 5, ainsi que des centres de distribution de l'eau selon la revendication 6, pour le conditionnement de l'eau.

13. Utilisation des agglomérats selon les revendications 1 ou 2 et des appareils selon les revendications 3 et 4, des unités de conditionnement de l'eau selon la revendication 5, ainsi que des centres de distribution de l'eau selon la revendication 6, pour l'élimination de métaux lourds, ainsi que de composés de phosphore, d'antimoine, de béryllium, de sélénium, de tellure et cyano, de l'eau.

14. Utilisation des agglomérats selon les revendications 1 ou 2 et des appareils selon les revendications 3 et 4, des unités de conditionnement de l'eau selon la revendication 5, ainsi que des centres de distribution de l'eau selon la revendication 6, pour l'élimination de composés d'arsenic de l'eau.
